# EUROPEAN PATENT SPECIFICATION

(11) **EP 0 583 892 B1**
(45) Date of publication and mention of the grant of the patent: **01.05.1996**
(21) Application number: 93305810.9
(22) Date of filing: 22.07.1993
(51) Int. Cl.: H01R 39/06, H01R 43/08

(54) **A planar carbon segment commutator**
Ebener Kohlesegmentkommutator
Commutateur plan à segments en charbon

(30) Priority: 14.08.1992 GB 9217259
(43) Date of publication of application: 23.02.1994
(73) Proprietor: JOHNSON ELECTRIC S.A., CH-2300 La Chaux-de-Fonds (CH)
(72) Inventor: Strobl, Georg, D-7000 Stuttgart 1 (DE)
(74) Representative: Higgins, Michael Roger

(56) References cited:
- WO-A-92/01321
- DE-A- 4 026 951
- DE-U- 8 907 045

## Description

### Field of the Invention

The invention relates to a planar or faceplate commutator in which the contact brushes bear axially against planar contact surfaces of the commutator, instead of bearing radially as in the case of a cylindrical commutator, and in which the contact surfaces are provided by a plurality of segments (normally arranged in an annular ring) having carbon outer layers for engagement with the contact brushes.

### Background Art

One known planar carbon segment commutator, disclosed in the specification of German Utility Model G 89 07 045.3, in the joint names of Deutsche Carbone AG and Robert Bosch GmbH, comprises a base member of insulating material having a rotational axis, a front surface extending, at least in part, transversely to the rotational axis, and a plurality of apertures extending rearwardly from the front surface; a plurality of circumferentially spaced contact members mounted on the front surface; and a plurality of circumferentially spaced overmoulded carbon segments respectively formed on the contact members and each having integral anchor means which extend rearwardly into said apertures.

Although the anchor means provide some radial support for the carbon segments mounted on the contact member, against centrifugal force, and some support against axial withdrawal from the contact member, this support is dependent upon the shear strength of the carbon in the anchor means and on the frictional engagement between the anchor means and the apertures in which they extend. Therefore, to ensure adequate radial and axial support for the contact members and the carbon segments, the contact members have to be provided with rearward extensions insert moulded into the front surface of the base member and undercut recesses for receiving integral rear portions of the overmoulded carbon segments. This involves relatively complex and time-consuming forming and pre-assembly operations. Moreover, the resultant products are not particularly robust.

### Disclosure of the Invention

The purpose of the present invention is to provide a planar carbon segment commutator which, at least to some extent, avoids the disadvantages of known planar carbon segment commutators and to provide a planar carbon segment commutator in which the carbon segments are more firmly secured to the base member and help to fasten the other components of the commutator.

This is achieved by providing a commutator in which each carbon segment is aligned with at least one aperture; at least one aperture aligned with each segment is provided with a first part and, rearwardly of the first part, with a second part having an abutment surface laterally offset from the first part; and the anchor means extending into said one aperture have locking means disposed within the second part of the aperture and engaging the abutment surface to thereby resist axial withdrawal of the anchor means from the aperture.

Thus, according to the invention, there is provided a planar carbon segment commutator for an electric motor, comprising a base member of insulating material having a rotational axis, a front surface extending, at least in part, transversely to the rotational axis, and a plurality of apertures extending rearwardly from the front surface and each provided with a first part and, rearwardly of the first part, with a second part having an abutment surface laterally offset from the first part; a plurality of circumferentially spaced contact members mounted on the front surface; and a plurality of circumferentially spaced overmoulded carbon segments, respectively formed on the contact members, each aligned with at least one aperture and each having integral anchor means which extend rearwardly into said one aperture and have locking means disposed within the second part of the aperture and engaging the abutment surface to thereby resist axial withdrawal of the anchor means from the aperture.

The invention also provides a method of manufacturing a planar carbon segment commutator for an electric motor, comprising the steps of providing a base member of insulating material having rotational axis and a front surface extending, at least in part, transversely to the rotational axis; forming the base member with a plurality of rearwardly extending apertures, including at least one aperture which is aligned with each segment and is provided with a first part and, rearwardly of the first part, with a second part having an abutment surface laterally offset from the first part; mounting a plurality of circumferentially spaced contact members on the front surface; and overmoulding a plurality of circumferentially spaced carbon segments respectively on the contact members so that each segment has integral anchor means which extend rearwardly into said apertures, and include anchor means, extending into the apertures provided with the first and second parts, which are provided with locking means disposed within the second parts and engaging the abutment surfaces to thereby resist axial withdrawal of the anchor means from the apertures.

A single layer of carbon is preferably overmoulded on the front surface of the base member and then divided into said segments by cutting radial grooves which pass through the single layer into the base member.

Thus, when the contact members have been mounted on the base member, a mould is fitted to the base member, the rear ends of the apertures are closed and a mouldable mixture of carbon powder and carrier material is injected into the space between the base member and the mould. This ensures that the mouldable mixture fills those parts of the apertures which are not occupied by the contact members. Any known carrier material, such as phenolic resin, may be used with the carbon powder to form the mouldable mixture, but the choice of carrier material and any subsequent heat treatment will depend on the operating requirements of different commutators, in accordance with known technology which forms no part of the present invention.

Where two anchor means extend rearwardly from a carbon segment, each may be of uniform cross-section provided the two anchor means extend along non-parallel axes. Even when the first of two anchor means extend along an axis parallel with the rotational axis of the base member, the second, non-parallel anchor means will extend into a uniform cross-section aperture having a first part, a second part rearwardly of the first part, and an abutment surface laterally offset from the first part and the second anchor means will have locking means disposed within the second part of the aperture which engage the abutment surface provided by the second part of this aperture to thereby resist axial separation of the carbon segment from the base member. Similarly, because the first of the anchor means extend parallel to the rotational axis of the base member, this first anchor means will resist non-axial separation of the carbon segment from the base member.

An analogous locking effect is also obtained when both anchor means extend rearwardly along non-parallel axes which are also both non-parallel to the rotational axis of the base member.

However, in preferred embodiments of the invention, at least one (and, for ease of manufacture, preferably each) aperture formed in the base member has a second part of greater cross-section than its first part, and the anchor means integral with at least one (and, for ease of manufacture, preferably each) overmoulded carbon segment comprise a single anchor piece which extends into one of these undercut apertures. Both the apertures and the anchor pieces may extend parallel to the rotational axis.

Each such undercut aperture may be frusto-conical in shape, in which case the rearward end of the inner surface of the aperture provides the abutment surface of the second part of the aperture. However, in a preferred form of commutator according to the invention, each undercut aperture formed with first and second parts has an internal bounding surface extending around the periphery of the aperture; at least one portion of said aperture bounding surface defines an inwardly directed, peripherally extending projection; and the locking means of the anchor piece extending into the aperture may comprise a locking portion having an edge disposed rearwardly of and in axial abutment with the peripherally extending projection. This provides a more positive axial attachment of each segment and contact member to the base member.

Advantageously, the base member has side and rear surfaces, each contact member has a radially outer part and at least one gripping part, and each gripping part has a first portion extending rearwardly from the radially outer part of the contact member, along the side surface of the base member, and a second portion extending radially inwards from the first portion, along the rear surface of the base member, to secure the contact member axially to the base member. Moreover, each contact member may have two such gripping parts on opposite sides of a terminal extending from the radially outer part of the contact member.

To provide additional or alternative means of positioning the contact members relative to the base member, prior to overmoulding, the base member is formed with a plurality of axial recesses, each contact member has at least one rearwardly extending locating portion, and the locating portions are respectively disposed within said axial recesses. Moreover, the locating portions may be formed with barbs which engage inner surfaces of the axial recesses to thereby resist axial withdrawal of the locating portions from the axial recesses. This not only helps secure the contact members to the base member in the final assembly, it also ensures that the contact members are firmly located on the base member during the overmoulding process when a mouldable mixture of carbon powder and carrier material is applied to the base member and the contact members.

Preferably, each contact member has at least one abutment surface facing away from the rotational axis and engaging the carbon segment formed on the contact member to resist radial outward movement of the contact member and, conveniently, each contact member is formed with at least one hole having a internal bounding surface and part of said bounding surface constitutes the abutment surface.

In this case, each aperture preferably has a third part disposed forwardly of the first part and having a cross-section which fully overlaps each hole formed in the contact member engaging the carbon segment having the anchor piece extending into the aperture. This ensures maximum radial interlocking between the overmoulded carbon and the contact members.

An embodiment of invention and its method of manufacture are hereinafter described, by way of example, with reference to the accompanying drawings.

### Brief Description of the Drawings

Figures 1 and 2 are perspective views, respectively, of a base member and a contact member forming part of a planar carbon segment commutator according to the invention;
Figure 3 is a perspective view of a sub-assembly comprising a base member, as shown in Figure 1, fitted with a plurality of a contact members, as shown in Figure 2;

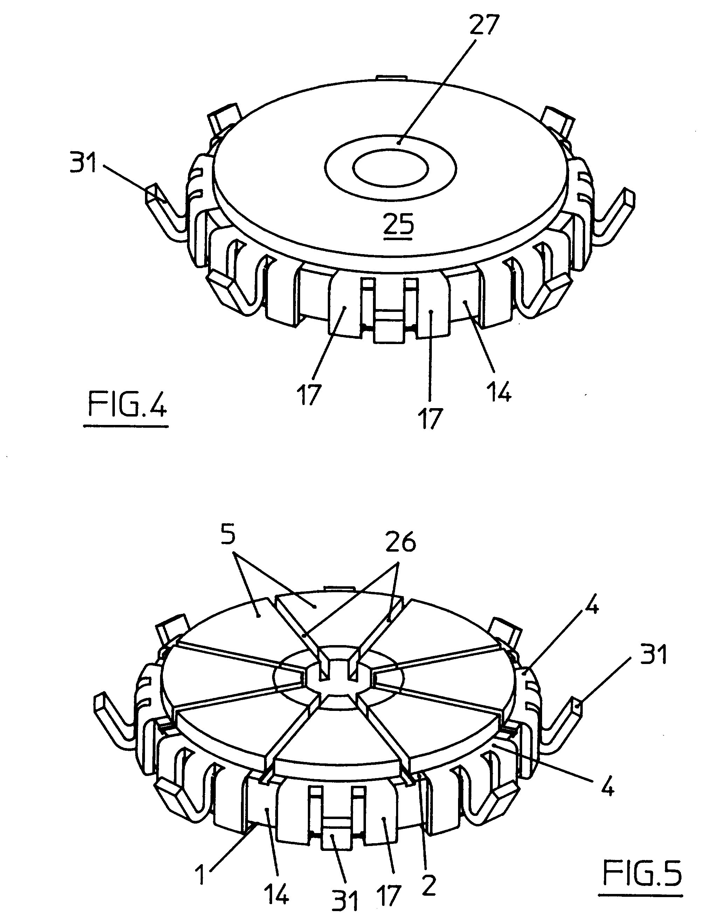

Figure 4 is a perspective view of the sub-assembly shown in Figure 3 provided with overmoulded carbon forming an outer layer for the formation of carbon segments;
Figures 5 and 6 are perspective views of a planar carbon segment commutator, according to the invention, showing, respectively, the front and rear surfaces of the commutator; and
Figure 7 is a sectional side elevational of the commutator shown in Figures 5 and 6.

### Best Modes of Carrying Out the Invention

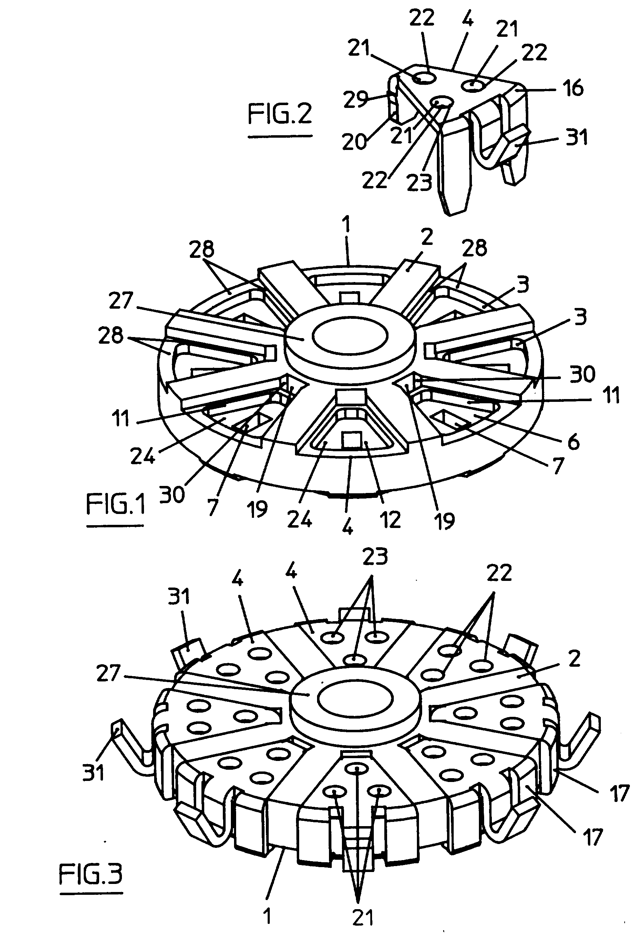

A circular base member 1, as shown in Figures 1, 3 and 7, has a rotational axis and a front surface including a central annular ring 27, radial strips 2 and support surfaces 28, perpendicular to the axis. The strips 2 are disposed between circumferentially spaced apertures 3 which each comprise a central first part 7 and second and third parts 8 and 24 respectively disposed rearwards and forwards of the first part 7.

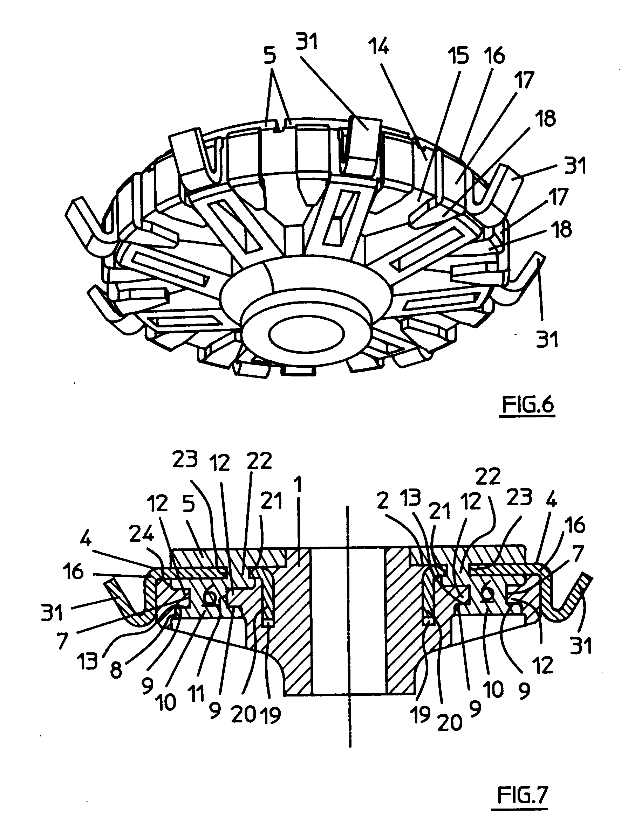

As shown in Figures 1 and 7, each aperture 3 has a bounding surfaces 11 defining an inwardly directed peripherally extending projection 12 which ensure that the second and third parts 8 and 24 of each aperture 3 have greater cross-sectional areas than the first part 7.

Support surfaces 28, forming part of the front surface of the base member, are provided around the apertures 3 for supporting contact members 4, as shown in Figure 3, and axial recesses 19 are formed in the base member 1 to receive locating portions 20 provided at the radially inner extremity of each contact member 4, as shown in Figure 2. Barbs 29 on the locating portions 20 engage with internal surfaces 30 of the axial recesses 19 to resist withdrawal of the locating portions 20 from the axial recesses 19.

A terminal 31 extends from the radially outer edge 16 of each contact member 4 for attachment of an armature lead. Two fingers extend from the radially outer edge 16 of each contact member 7, on opposite sides of the terminal 31, to form gripping parts for securing the contact member 4 axially to the base member 1. As shown in Figure 6, each gripping part has a first portion 17 extending rearwardly from the radially outer edge 16 of the contact member 4, along a side surface 14 of the base member 1, and a second portion 18 extending radially inwards from the first portion 17, along a rear surface 15 of the base member 1.

When all the contact members 4 are mounted in position on the base member 1, as shown in Figure 3, the sub-assembly is placed in a mould (not shown) defining an annular cavity surrounding the central annular ring 27 and the second parts 8 of the apertures 3 in the base member 1 are blanked off on the rearward side of the base member 1. A mouldable mixture of carbon powder and carrier material, such as phenolic resin, is then injected into the annular mould cavity. This injected material flows through holes 22 formed in the contact members 4 and fills the apertures 3 in the base member 1 to form integral anchor pieces 6.

As shown in Figure 7, the rearmost end of each anchor piece 6 forms a locking portion 10 disposed within the second part 8 of the aperture 3 in which the anchor piece 6 is disposed and has an edge 13 disposed rearwardly inwardly of and in axial abutment with an abutment surface 9 provided by the peripherally extending projection 12 to thereby secure the anchor piece 6 against axial withdrawal from the aperture 3.

As shown in Figures 3 and 7, the contact members 4 are each formed with three holes 22 having internal bounding surfaces 23. The radially inner portion of each of these bounding surfaces 23 therefore faces away from the rotational axis and serves as an abutment surface 21 with engages the carbon forming segment 5 enclosing the contact member 4 thereby to resist prevent outward radial movement of the contact member 4 relative to the segment 5. Similarly, to the extent that each contact member 4 is otherwise attached to the base member 1, for example, by means of the locating portion 20, the radially outer portion of the bounding surface 23 of each aperture 22 abuts the carbon forming the segment 5 enclosing the contact member 1 to thereby prevent outward radial movement of the segment 5 relative to the contact member 4.

This interlocking of the carbon with the contact members 4 is enhanced by ensuring that the cross-section of the third part 24 of each aperture 3 is large enough to encompass fully all of the holes 22 in the adjacent contact member 4.

The base member 1 and contact members 4 are thus formed separately, assembled together, and then locked together in an overmoulding process in which a carbon layer 25, for the carbon segments 5, is formed with integral anchor pieces 6 which hold the carbon layer 25 in place on the base member 1. The carbon layer 25 is then separated into segments 5 by cutting radial slots 26 which pass right through the carbon layer 25 into the underlying base member 1. As shown in Figure 5, these slots 26 also pass through the central annular ring 27 and into the strips 2. The segments 5 are therefore circumferentially separated and insulated from each other.

## Claims

1. A planar carbon segment commutator, for an electric motor, comprising:
a base member (1) of insulating material having a rotational axis, a front surface (2) extending, at least in part, transversely to the rotational axis, and a plurality of apertures (3) extending rearwardly from the front surface (2);
a plurality of circumferentially spaced contact members (4) mounted on the front surface (2); and
a plurality of circumferentially spaced overmoulded carbon segments (5) respectively formed on the contact members (4) and each having integral anchor means (6) which extend rearwardly into said apertures (3);
characterized in that:
each carbon segment (5) is aligned with at least one aperture (3);
at least one aperture (3) aligned with each segment (5) is provided with a first part (7) and, rearwardly of the first part (7), with a second part (8) having an abutment surface (9) laterally offset from the first part (7); and
the anchor means (6) extending into said one aperture (3) have locking means (10) disposed within the second part (8) of the aperture (3) and engaging the abutment surface (9) to thereby resist axial withdrawal of the anchor means (6) from the aperture (3).

2. A commutator, according to Claim 1, in which:
at least one of said apertures (3) formed with first and second parts (7 and 8) extends parallel to the rotational axis and has its second part (8) of greater cross-section than its first part (7); and
the anchor means (6) integral with at least one overmoulded carbon segment (5) comprise a single anchor piece and each said anchor piece (6) extends axially into one of said apertures (3) extending parallel to the rotational axis.

3. A commutator, according to Claim 2, in which:
each aperture (3) formed with first and second parts (7 and 8) has an internal bounding surface (11) extending around the periphery of the aperture (3);
at least one portion of said bounding surface (11) defines an inwardly directed, peripherally extending projection (12); and
the locking means (10) of the anchor means (6) extending into said aperture (3) have an edge (13) disposed rearwardly of and in axial abutment with the peripherally extending projection (12).

4. A commutator, according to Claim 2 or Claim 3 in which:
the base member (1) has side and rear surfaces (14 and 15);
each contact member (4) has a radially outer edge (16) and at least one gripping part (17, 18); and
each gripping part (17, 18) has a first portion (17) extending rearwardly from the radially outer edge (16) of the contact member (4), along the side surface (14) of the base member (1), and a second portion (18) extending radially inwards from the first portion (17), along the rear surface (15) of the base member (1), to secure the contact member (4) axially to the base member (1).

5. A commutator, according to any preceding claim, in which:
the base member (1) is formed with a plurality of axial recesses (19);
each contact member (4) has at least one rearwardly extending locating portion (20); and
the locating portions (20) are respectively disposed within said axial recesses (19).

6. A commutator, according to any preceding claim, in which each contact member (4) has at least one abutment surface (21) facing away from the rotational axis and engaging the carbon segment (5) formed on the contact member (4) to resist radial outward movement of the contact member (4).

7. A commutator, according to Claim 6, in which each contact member (4) is formed with at least one hole (22) having an internal bounding surface (23) and part of said bounding surface (23) constitutes the abutment surface (21).

8. A commutator, according to Claim 7, in which each aperture (3) has a third part (24) disposed forwardly of the first part (7) and having a cross-section which fully overlaps each hole (22) formed in the contact member (4) engaging the carbon segment (5) having the anchor piece (6) extending into the aperture (3).

9. A method of manufacturing a planar carbon segment commutator for an electric motor, comprising the steps of:
providing a base member (1) of insulating material having rotational axis and a front surface (2) extending, at least in part, transversely to the rotational axis;
forming the base member (1) with a plurality of rearwardly extending apertures (3);
mounting a plurality of circumferentially spaced contact members (4) on the front surface (2); and
overmoulding a plurality of circumferentially spaced carbon segments (5) respectively on the contact members (4) so that each segment (5) has integral anchor means (6) which extend rearwardly into said apertures (3);
characterized in that:
at least one aperture (3) is aligned with each segment (5) and is provided with a first part (7) and, rearwardly, of the first part (7), with a second part (8) having an abutment surface (9) laterally offset from the first part (7); and
the anchor means (6) include anchor means (6) which extend into the apertures (3) provided with the first and second parts (7 and 8) and are provided with locking means (10) disposed within the second parts (8) and engaging the abutment surfaces (9) to thereby resist axial withdrawal of the anchor means (6) from the apertures (3).

10. A method, according to Claim 9, in which a single layer (25) of carbon is overmoulded on the front surface (2) of the base member (1) and then divided into said segments (5) by cutting radial grooves (26) which pass through the single layer (25) into the base member (1).

## Patentansprüche

1. Kohlesegment-Planarkommutator für einen Elektromotor, der folgende Komponenten aufweist:
ein Grundelement (1) aus isolierendem Material, das eine Rotationsachse, eine Frontfläche (2). die zumindest teilweise quer zu der Rotationsachse verläuft, und eine Vielzahl von Öffnungen hat (3), die von der Frontfläche (2) nach hinten verlaufen;
eine Vielzahl von im Abstand über dem Umfang angeordneten Kontaktelementen (4), die an der Frontfläche (2) befestigt sind; und
eine Vielzahl von im Abstand über dem Umfang angeordneten, durch Formen gebildeten Kohlesegmenten (5), die jeweils an den Kontaktelementen (4) gebildet werden und jedes integrale Befestigungsmittel (6) haben, die nach hinten in die eine Öffnung (3) reichen;
dadurch gekennzeichnet, daß:
jedes Kohlesegment (5) mit wenigstens einer Öffnung (3) ausgerichtet ist;
wenigstens eine Öffnung (3), die mit jedem Segment (5) ausgerichtet ist, mit einem ersten Teil (7) und, hinter dem ersten Teil (7), mit einem zweiten Teil (8) versehen ist, der eine Stoßfläche (9) hat, die gegenüber dem ersten Teil (7) seitlich versetzt ist; und
die Befestigungsmittel (6), die in die eine Öffnung (3) hineinreichen, Sperrmittel (10) haben, die innerhalb des zweiten Teils (8) der Öffnung (3) angeordnet sind und mit der Stoßfläche (9) im Eingriff sind, um auf diese Weise dem Zurückziehen der Befestigungsmittel (6) in Axialrichtung aus der Öffnung (3) entgegenzuwirken.

2. Kommutator nach Anspruch 1, bei dem:
wenigstens eine der Öffnungen (3), die mit dem ersten und dem zweiten Teil (7 und 8) gebildet werden, parallel zur Rotationsachse verläuft und einen zweiten Teil (8) mit einem größeren Durchmesser als deren erster Teil (7) hat; und
die Befestigungsmittel (6), die integraler Bestandteil wenigstens eines der überformten Kohlesegmente (5) sind, ein einziges Befestigungsstück umfassen und jedes dieser Befestigungsstücke (6) in Axialrichtung in eine der Öffnungen (3) hineinreicht, die parallel zur Rotationsachse verlaufen.

3. Kommutator nach Anspruch 2, bei dem:
jede Öffnung (3), die mit dem ersten und dem zweiten Teil (7 und 8) gebildet wird, eine innere Grenzfläche (11) hat, die um den Umfang der Öffnung (3) verläuft;
wenigstens ein Abschnitt der Grenzfläche (11) einen nach innen gerichteten, um den Umfang verlaufenden Vorsprung (12) bildet; und
die Sperrmittel (10) der Befestigungsmittel (6), die in die Öffnung (3) hineinreichen, eine Kante (13) haben, die hinter und im Axialstoß mit dem um den Umfang verlaufenden Vorsprung (12) angeordnet ist.

4. Kommutator nach Anspruch 2 oder Anspruch 3, bei dem:
das Grundelement (1) Seiten- und hintere Flächen (14 und 15) hat;
jedes Kontaktelement (4) eine in Radialrichtung äußere Kante (16) und wenigstens einen Spannteil (17, 18) hat; und
jede Spannteil (17, 18) einen ersten Abschnitt (17), der von der in Radialrichtung äußeren Kante (16) des Kontaktelements (4) längs der Seitenfläche (14) des Grundelements (1) nach hinten verläuft, und einen zweiten Abschnitt (18) hat, der von dem ersten Abschnitt (17) längs der hinteren Fläche (15) des Grundelements (1) in Radialrichtung nach innen verläuft, um das Kontaktelement (4) in Axialrichtung am Grundelement (1) zu sichern.

5. Kommutator nach einem der vorstehenden Ansprüche, bei dem:
das Grundelement (1) mit einer Vielzahl von Axialaussparungen (19) gebildet wird;
jedes Kontaktelement (4) wenigstens einen nach hinten verlaufenden Ausrichtungsabschnitt (20) hat; und
die Ausrichtungsabschnitte (20) jeweils innerhalb der Axialaussparungen (19) angeordnet sind.

6. Kommutator nach einem der vorstehenden Ansprüche, bei dem jedes Kontaktelement (4) wenigstens eine Stoßfläche (21) hat, die von der Rotationsachse weg zeigt und mit dem Kohlesegment (5) im Eingriff ist, das auf dem Kontaktelement (4) gebildet wird, um der Auswärtsbewegung des Kontaktelements (4) in Radialrichtung entgegenzuwirken.

7. Kommutator nach Anspruch 6, bei dem jedes Kontaktelement (4) mit wenigstens einem Loch (22) versehen ist, das eine innere Grenzfläche (23) hat, und ein Teil der Grenzfläche (23) die Stoßfläche (21) darstellt.

8. Kommutator nach Anspruch 7, bei dem jede Öffnung (3) einen dritten Teil (24) hat, der vor dem ersten Teil (7) angeordnet ist und einen Querschnitt hat, der jedes Loch (22) vollständig überlagert, das in dem Kontaktelement (4) gebildet wird, das mit dem Kohlesegment (5) im Eingriff ist, welches das Befestigungsstück (6) hat, das in die Öffnung (3) hineinreicht.

9. Verfahren zur Fertigung eines Kohlesegment-Planarkommutators für einen Elektromotor, das die folgenden Schritte umfaßt:
Bereitstellen eines Grundelements (1) aus Isoliermaterial, das eine Rotationsachse und eine Frontfläche (2) hat, die zumindest teilweise quer zu der Rotationsachse verläuft;
Versehen des Grundelements (1) mit einer Vielzahl von nach hinten verlaufenden Öffnungen (3);
Anbringen einer Vielzahl von im Abstand über dem Umfang angeordneten Kontaktelementen (4) an der Frontfläche (2); und
Aufbringen einer Vielzahl von über dem Umfang angeordneten Kohlesegmenten (5) durch Formen jeweils auf den Kontaktelementen (4), so daß jedes Segment (5) integrale Befestigungsmittel (6) hat, die nach hinten in die Öffnungen (3) hineinreichen,;
dadurch gekennzeichnet, daß:
mit jedem Segment (5) wenigstens eine Öffnung (3) ausgerichtet ist und einen ersten Teil (7) und, hinter dem ersten Teil (7), einen zweiten Teil (8) aufweist, der eine Stoßfläche (9) hat, die seitlich gegenüber dem ersten Teil (7) versetzt ist; und
die Befestigungsmittel (6) Befestigungsmittel (6) einschließen, die in die Öffnungen (3) hineinreichen, welche die ersten und zweiten Teile (7 und 8) aufweisen, und mit Sperrmitteln (10) versehen sind, die innerhalb der zweiten Teile (8) angeordnet sind und im Eingriff mit den Stoßflächen (9) sind, um auf diese Weise dem Zurückziehen der Befestigungsmittel (6) in Axialrichtung aus den Öffnungen (3) entgegenzuwirken.

10. Verfahren nach Anspruch 9, bei dem eine einzige Schicht (25) aus Kohle durch Formen auf die Frontfläche (2) des Grundelements (1) aufgebracht und dann durch das Einschneiden von Radialrillen (26), die durch die einzige Schicht (25) hindurch in das Grundelement (1) reichen, in die Segmente (5) unterteilt wird.

## Revendications

1. Commutateur plan à segments de carbone pour un moteur électrique comprenant:
un élément de base (1) composé de matériau isolant, comportant un axe de rotation, une surface frontale (2). s'étendant du moins en partie transversalement par rapport à l'axe de rotation, et plusieurs ouvertures (3) s'étendant vers l'arrière à partir de la surface frontale (2);
plusieurs éléments de contact espacés circonférentiellement (4), montés sur la surface frontale (2); et
plusieurs segments de carbone surmoulés espacés circonférentiellement (5), formés respectivement sur les éléments de contact (4) et comportant chacun un moyen d'ancrage incorporé (6) s'étendant vers l'arrière dans lesdites ouvertures (3);
caractérisé en ce que:
chaque segment de carbone (5) est aligné avec au moins une ouverture (3);
au moins une ouverture (3) alignée avec chaque segment (5) comporte une première partie (7) et une deuxième partie (8) agencée derrière la première partie (7), la deuxième partie (8) comportant une surface de butée (9) décalée latéralement par rapport à la première partie (7); et
les moyens d'ancrage (6) s'étendant dans ladite une ouverture (3) comportent des moyens de verrouillage (10) agencés dans la deuxième partie (8) de l'ouverture (3) et s'engageant dans la surface de butée (9) pour résister ainsi à un retrait axial des éléments d'ancrage (6) de l'ouverture (3).

2. Commutateur selon la revendication 1, dans lequel:
au moins une desdites ouvertures (3) comportant des première et deuxième parties (7 et 8) s'étend parallèlement à l'axe de rotation et comporte une deuxième partie (8) à section plus grande que la première partie (7); et
les moyens d'ancrage (6) incorporés dans au moins un segment de carbone surmoulé (5) comprennent une seule pièce d'ancrage, chacune desdites pièces d'ancrage (6) s'étendant axialement dans l'une desdites ouvertures (3) s'étendant parallèlement à l'axe de rotation.

3. Commutateur selon la revendication 2, dans lequel:
chaque ouverture (3) comportant des première et deuxième parties (7 et 8) comporte une surface de délimitation interne (11) s'étendant autour de la périphérie de l'ouverture (3);
au moins une partie de ladite surface de délimitation (11) définit une saillie à extension périphérique dirigée vers l'intérieur (12); et
les moyens de verrouillage (10) des moyens d'ancrage (6) s'étendant dans ladite ouverture (3) comportent un bord (13) agencé derrière la saillie à extension périphérique (12) et butent axialement contre celle-ci.

4. Commutateur selon les revendications 2 ou 3, dans lequel:
l'élément de base (1) comporte des surfaces latérales et arrière (14 et 15);
chaque élément de contact (4) comporte un bord radialement externe (16) et au moins une partie de serrage (17, 18); et
chaque partie de serrage (17, 18) comporte une première partie (17) s'étendant vers l'arrière à partir du bord radialement externe (16) de l'élément de contact (4), le long de la surface latérale (14) de l'élément de base (1), et une deuxième partie (18) s'étendant radialement vers l'intérieur à partir de la première partie (17), le long de la surface arrière (15) de l'élément de base (1), pour fixer axialement l'élément de contact (4) à l'élément de base (1).

5. Commutateur selon l'une quelconque des revendications précédentes, dans lequel:
l'élément de base (1) comporte plusieurs évidements axiaux (19);
chaque élément de contact (4) comporte au moins une partie de positionnement s'étendant vers l'arrière (20); et
les parties de positionnement (20) sont respectivement agencées dans lesdits évidements axiaux (19).

6. Commutateur selon l'une quelconque des revendications précédentes, dans lequel chaque élément de contact (4) comporte au moins une surface de butée (21) opposée à l'axe de rotation et s'engageant dans le segment de carbone (5) formé sur l'élément de contact (4), pour résister à un mouvement radial vers l'extérieur de l'élément de contact (4).

7. Commutateur selon la revendication 6, dans lequel chaque élément de contact (4) comporte au moins un trou (22) avec une surface de délimitation interne (23), une partie de ladite surface de délimitation (23) constituant la surface de butée (21).

8. Commutateur selon la revendication 7, dans lequel chaque ouverture (3) comporte une troisième partie (24), agencée devant la première partie (7) et ayant une section chevauchant complètement chaque trou (22) formé dans l'élément de contact (4), s'engageant dans le segment de carbone (5) comportant la pièce d'ancrage (6) s'étendant dans l'ouverture (3).

9. Procédé de fabrication d'un commutateur plan à segments de carbone pour un moteur électrique, comprenant les étapes ci-dessous:
fourniture d'un élément de base (1) composé de matériau isolant et comportant un axe de rotation et une surface frontale (2) s'étendant du moins en partie transversalement à l'axe de rotation;
agencement de plusieurs ouvertures (3) s'étendant vers l'arrière dans l'élément de base (1);
montage de plusieurs éléments de contact (4) espacés circonférentiellement sur la surface frontale (2); et
surmoulage de plusieurs segments de carbone espacés circonférentiellement (5) sur les éléments de contact respectifs (4), de sorte que chaque segment (5) comporte un moyen d'ancrage incorporé (6) s'étendant vers l'arrière dans lesdites ouvertures (3);
caractérisé en ce que:
au moins une ouverture (3) est alignée avec chaque segment (5) et comporte une première partie (7) et une deuxième partie (8) agencée derrière la première partie (7), la deuxième partie (8) comportant une surface de butée (9) décalée latéralement par rapport à la première partie (7); et
les moyens d'ancrage (6) englobent des moyens d'ancrage (6) s'étendant dans les ouvertures (3) comportant les première et deuxième parties (7 et 8) et comportent des moyens de verrouillage (10) agencés dans les deuxièmes parties (8) et s'engageant dans les surfaces de butée (9) pour résister ainsi à un retrait axial des moyens d'ancrage (6) des ouvertures (3).

10. Procédé selon la revendication 9, dans lequel une seule couche (25) de carbone est surmoulée sur la surface frontale (2) de l'élément de base (1) avant la division dans lesdits segments (5) par découpage de rainures radiales (26) traversant la seule couche (25) et pénétrant dans l'élément de base (1).
